Europäisches Patentamt

European Patent Office

Office européen des brevets

(11) Publication number: 0 374 873 A2

# EUROPEAN PATENT APPLICATION

(21) Application number: 89123534.3

(22) Date of filing: 20.12.89

(51) Int. Cl.5: B01D 53/22, B01D 53/18, B01D 19/00, B01D 61/00, B01D 63/02

(30) Priority: 20.12.88 US 287249

(43) Date of publication of application: 27.06.90 Bulletin 90/26

(84) Designated Contracting States: BE DE FR GB IT LU NL

(71) Applicant: THE DOW CHEMICAL COMPANY 2030 Dow Center Abbott Road Midland, MI 48640(US)

(72) Inventor: Glassford, Craig L. 42 Copperfield Court Clearwater Ontario N7S 5K8(CA)

(74) Representative: Casalonga, Axel et al BUREAU D.A. CASALONGA - JOSSE Morassistrasse 8 D-8000 München 5(DE)

(54) Efficient vapor- liquid mass transfer by microporous membrane fibers.

(57) An apparatus and method for preferably gransferring a gas from a gaseous mixture to liquid absorbent utilizing an array of microporous hollow membrane fibers. The membrane fibers are advantageously woven into a cloth. Layers of membrane fibers are positioned in a gas conduit generally normal to the direction of gas flow arranged in a generally planar array.

Fig. 1

# EFFICIENT VAPOR-LIQUID MASS TRANSFER BY MICROPOROUS MEMBRANE FIBERS

This invention relates to efficient mass transfer of a volatile component between a gas stream and a liquid stream flowing through microporous membrane fibers.

It is known to transfer a gas through a microporous membrane to a liquid such as in a blood oxygenator. It is also known to remove a volatile component from a liquid stream by transfer of a vapor through a microporous membrane from a liquid phase to a gas phase. While the principle of gas transfer involving microporous membranes is known, efficient application of the principle has not previously been disclosed.

Traditional methods of transfer of components of gas streams to liquid streams include wetted-wall towers, falling-film absorbers, spray towers, stirred vessels, spray towers containing bubble-caps, sieve trays, or valve trays, strippers and packed towers. The traditional methods suffer from disadvantages of high capital and operating costs and small effective contact area between the gas phase and liquid phase. Attempts have been made to overcome the disadvantages of traditional methods by taking advantage of the high contact area possible with microporous membranes. Prior devices have resembled shell and tube heat exchangers, as, for example, disclosed by U.S. Patent 4,268,279 to Shindo et al., and U.S. Patent 4,031,012 to Gics.

An object of the present invention is to provide an apparatus and method for the efficient removal of one or more gases from a gaseous mixture stream or the efficient transfer of a vaporous component of a liquid mixture/solution stream to an absorbent stream by the use of microporous membrane fibers.

The invention comprises an apparatus and method for transferring one or more gases from a gaseous mixture or volatile components from a liquid mixture/solution into an absorbing gas or liquid, wherein said gaseous mixture or said liquid mixture/solution is flowing in a conduit. The invention requires contacting the gaseous or liquid mixture with an array of closely spaced gas porous polymeric microporous hollow membrane fibers mounted inside the conduit such that said flowing gas or liquid mixture flows through said array, contacting the exterior surfaces of said fibers.

Each hollow membrane fiber of the array passes through the walls of said conduit and has first and second ends connected, beyond the walls of said conduit, to an inlet manifold and an outlet manifold, respectively. The method of the invention next requires flowing an absorbent into said inlet manifold, through the bores of said fibers, and out said outlet manifold. The gas or volatile component to be removed from the mixture permeates and transfers from the exterior of said hollow fibers into said bore where it is absorbed by said absorbent.

Preferably, the microporous hollow membrane fiber array comprises one or more layers of a woven cloth having weft and warp fibers. Also preferably, the method of the invention is directed to transfering a gas from a mixture into an absorbent liquid flowing through the bores of said fibers.

The apparatus and method of the invention offers an advantage over prior art gas-liquid mass transfer apparatus and methods in that the gas flow rate is independent of the liquid flow rate.

The invention achieves mass transfer coefficients equal to and in excess of those of the prior art at gas and liquid flow rates reduced by at least an order of magnitude from the gas and liquid flow rates necessary for conventional apparatus such as a packed tower. This invention permits significant reduction in the size of the mass transfer equipment that forms the gas-liquid mass transfer interface and a corresponding reduction of the size of ancillary equipment, such as gas handling and liquid handling equipment necessary to attain reasonable mass transfer rates.

Figure 1 shows microporous membrane fibers in a generally planar array disposed generally normal to the axis of a gas conduit.

Figure 2 is a sectional elevation view of the microporous membrane fibers in a generally planar array in the gas conduit.

Figure 3 is a plan-view of a section through the microporous membrane array of Figure 2.

Figure 4 shows typical gas phase pressure drops for the membrane apparatus of this invention and for a conventional packed tower mass transfer device.

Figure 5 shows mass transfer coefficients for the membrane apparatus of this invention and a conventional packed tower.

This invention is based on the discovery that mass transfer which results between a liquid and a gas, said liquid flowing through the bores of a plurality of microporous membrane fibers arranged in a cloth assembly and positioned in a gas stream substantially perpendicular to the flow of the gas stream, more than compensates for the pressure loss in the gas stream.

The invention will be initially described as an absorption device for the transfer of components from a gas or vapor stream into a liquid stream. The practitioner will readily understand, however, that conversely, the device and processes described are readily applicable to stripping or desorption as well, i.e., transfer of a volatile component from a liquid to a stream of gas or vapor.

The method and apparatus are useful for mass transfers to and from gas streams for which conventional mass transfer methods and devices are used. Suitable gases which may be transferred to or from the liquid phase in a microporous hollow membrane fiber include volatile hydrocarbons, volatile halogenated hydrocarbons, volatile oxygenated hydrocarbons, ammonia, volatile amines, hydrogen sulfide, sulfur dioxide, halogen gas, and carbon oxides.

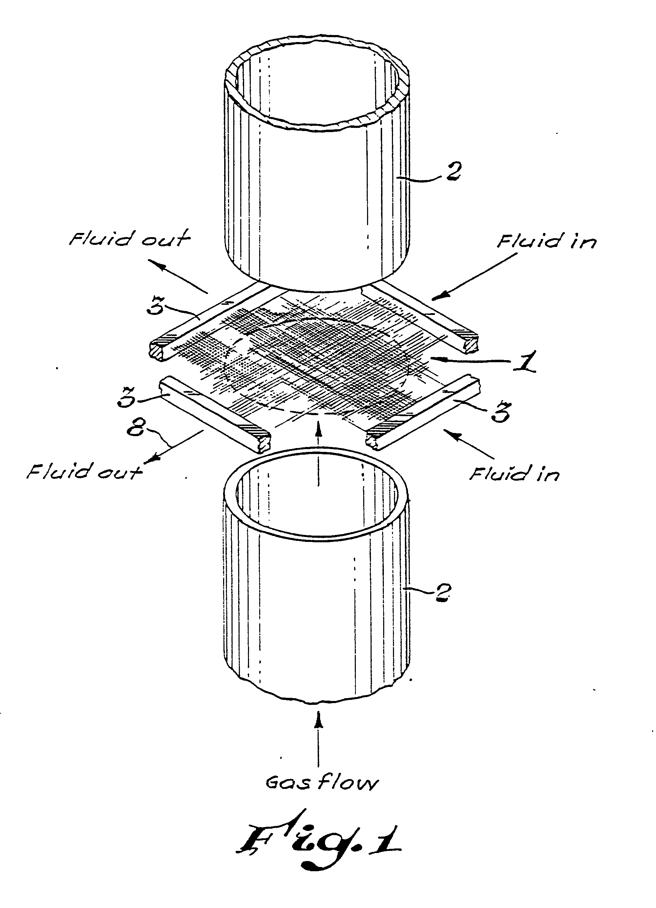

Referring to Figure 1, microporous hollow membrane fibers arranged in a generally planar array (1) are interposed in a gas conduit (2) so as to intersect the flow of a gas stream in the conduit containing the component to be transferred from the gas stream to the liquid stream, or vice versa. The generally planar array of microporous hollow membrane fibers permits the flow of gas through the porous array. While individual membrane fibers or bundles of fibers may be randomly or regularly oriented in the generally planar array, it is advantageous to weave the fibers into cloth. The cloth form of membrane fibers array aids in maintaining a uniform spacing between individual membrane fibers to prevent channeling of gas flow through the fibers which would reduce mass transfer efficiency. The weft threads of the microporous cloth aid by maintaining dimensional stability of the membrane fibers during fabrication.

Generally the orientation of the array of membrane fibers will be perpendicular to the direction of flow of the gas within the conduit. However, the array of membrane fibers may be positioned in any non-perpendicular orientation to gas flow in the conduit.

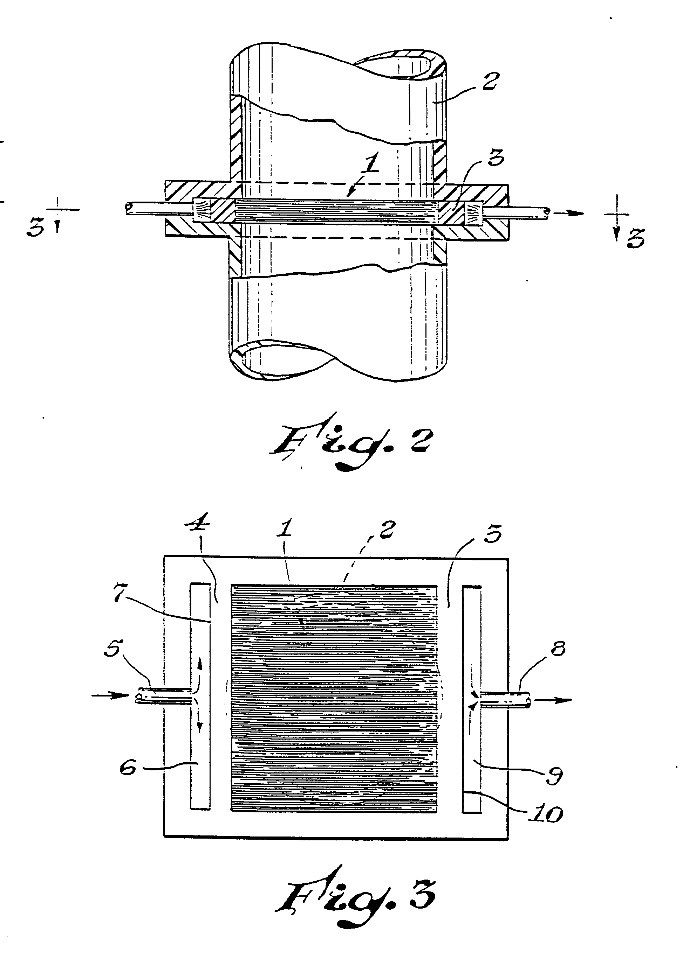

Figures 2 and 3 illustrate an apparatus installed directly in a conduit containing a gas mixture stream having a component to be transferred. A liquid flows in the bores of the microporous hollow fibers. The liquid chosen is one in which the gas component to be transferred is miscible or the gas and liquid phase react to form a nearly irreversible liquid reaction product.

The selection criteria for choosing a suitable liquid to effect mass transfer are generally the same criteria as would be considered if the mass transfer apparatus were a conventional packed tower. The practitioner will often select a suitable mass transfer liquid from water, an aqueous acid, an aqueous base, a liquid hydrocarbon, a liquid oxygenated hydrocarbon, a liquid sulfur containing hydrocarbon, or a liquid halogenated hydrocarbon.

Where hollow microporous membrane fibers arranged in a cloth assembly are used, the cloth of microporous hollow membrane fibers advantageously is larger than the cross-section of the conduit containing the gas flow. Generally, the limitng dimension of microporous hollow membrane cloth will be in the direction of the fabric weft (i.e. width of the cloth). Where the minimum dimension of a gas conduit is larger than the width of available microporous membrane cloth, the apparatus may be assembled by weaving strips of narrower hollow microporous membrane cloth, as a tape, in lattice fashion into a layered microporous membrane cloth of the necessary size and shape to form a generally planar porous intercept in the gas conduit.

The cloth of microporous hollow membrane fibers must be sealed to prevent escape of gas from the conduit as well as the entrance of bore liquid into the gas conduit. Such sealing can be provided by installing the microporous membrane cloth in a suitably modified segment of gas flow conduit.

A modified segment of gas flow conduit may consist of a single section of conduit having located therein an array of microporous membrane fibers. Or, a modified segment of gas flow conduit may consist of an array of microporous membrane fibers interposed between two sections of gas flow conduit. The modified segment of gas flow conduit may then be assembled with other sections of gas flow tube by conventional methods in a manner so as to avoid material interference with gas flow.

Referring to Figures 2 and 3, a generally planer array of microporous hollow membrane fibers is illustrated as installed in a conduit or pipe (2). The bores of the cloth or other array of microporous hollow membrane fibers connect with a liquid inlet (5) by means of an inlet manifold (6). The bores of the cloth or other array of microporous hollow membrane fiber connect with a liquid outlet (8) by means of an outlet manifold (9). The microporous hollow membrane fibers may be sealed by conventional methods such as potting the substantially planar membrane apparatus around the perimeter of the gas conduit in a chemically setting polymer resin such as epoxy. (As shown in Figure 1, the open ends of the hollow microporous membrane fibers forming the warp end of the membrane cloth are advantageously similarly potted into a traditional tube sheet.) The liquid inlet tube sheet (4) and liquid outlet tubesheet (3) are sealingly engaged with their respective manifolds to permit the bore liquid to flow from the liquid inlet (5) through the bores of the fibers forming the array (1). The bore fluid is collected by the outlet manifold (9) and discharged by outlet (8).

The gas conduit and membrane cloth are arranged to minimize channeling of the gas flow through the

3

cloth of microporous membrane and to cause the gas to come into intimate, impinging contact with the exterior surfaces of the hollow microporous membrane fibers of the membrane cloth. A substantially uniform resistance to gas flow through the microporous membrane fiber, and consequently substantially uniform gas flow through the planar array of microporous membrane fibers, is advantageously achieved by potting a plurality of membrane cloth layers having their respective weft and warp directions parallel. Or, such uniform distribution may be achieved by potting a pluralty of microporous membrane cloth sections having their respective weft and warp directions perpendicular. Or, such uniform gas flow distribution be achieved by a plurality of layers of microporous membrane cloth having their weft and warp orientations varied by one or more angular degrees with respect to the warp and weft directions of one or more adjacent cloth layers. Other apparent methods of achieving substantially uniform gas flow across the entire cross-section of microporous membrane fibers are contemplated herein.

Microporous hollow polymer fibers suitable for this invention and for use as yarn for the weaving of microporous membrane cloth useful in this invention has an outside diameter of 1 cm to 10 $\mu$m, advantageously 0.1 mm to 1 mm, most advantageously from 0.25 mm. to 0.75 mm. Said hollow fiber as yarn useful in this invention has a permeability to nitrogen gas of $1.0 \times 10^{-1}$ cc/sec-cm$^2$-cmHg, to $1.0 \times 10^{-4}$ cc/sec-cm$^2$-cmHg, advantageously $5.0 \times 10^{-2}$ cc/sec-cm$^2$-cmHg to $1.0 \times 10^{-3}$ cc/sec-cm$^2$-cmHg. Said microporous fiber useful in this invention has a wall thickness of 5 $\mu$m to 50 $\mu$m, advantageously from 10 $\mu$m to 40 $\mu$m.

Polymeric materials suitable for the preparation of microporous membrane fibers of this invention are advantageously selected after consideration of the physical properties of the polymeric material, the operating environment anticipated for the membrane apparatus and the resistance to attack of the polymeric material by the liquid phase and gas phase chemicals.

Microporous membrane cloth made from hollow fibers of polyolefin is commercially available. Polyolefin microporous fibers and microporous hollow fibers of other hydrophobic polymeric materials are particularly suited to gas-liquid systems wherein the liquid phase is polar or water based. In such systems, the hydrophobic character of the polymeric material tends to keep the liquid phase within the hollow fiber. In gas-liquid systems where the liquid is non-polar, a microporous fiber formed from a hydrophilic polymeric material such as polysulfone is advantageous.

Examples

The following examples are illustrations of the instant invention.

Example 1

A gas recovery or purification apparatus similar to that shown in Figure 1 is made using as a porous barrier layers of microporous hollow membrane cloth made of microporous polyethylene fibers. The microporous membrane cloth used may be purchased from CD Medical Inc., 14600 NW 60 Ave., P.O. Box 9308, Miami Lakes, FL 33014-9308. The cloth has a dimension of 9 cm to 9.5 cm in the warp direction, and a thickness of from 0.3 mm to 0.4 mm. The fibers have an outside diameter of 300 $\mu$m to 350 $\mu$m. Ten layers of the cloth are assembled having the weft direction of alternate layers oriented at right angles to adjacent layers. The ends of the weft of microporous membrane fibers are potted in epoxy resin to form tube sheets for the microporous membrane fibers. The tube sheets are sealingly engaged to a liquid conduit to form a manifold to the open ends of the microporous membrane fibers. The apparatus is assembled in a gas conduit segment made of polycarbonate having an inside diameter of 7.6 cm extending 30 cm in each direction from the membrane apparatus.

Example 2

An apparatus is assembled as in Example 1 except that, instead of 10 layers of membrane cloth, the apparatus is assembled from 20 layers of the same membrane cloth used in Example 1. Another apparatus including 50 layers of membrane cloth is also assembled.

The mass transfer rates between the gas phase and the liquid phase of the microporous membrane apparatus described herein may be expected to be influenced by a variety of factors including the thermodynamics of the mass transfer components of the liquid and gas phases which influence the mass transfer in the apparatus and method of the instant invention as those factors influence the mass transfer in conventional apparatus and methods. The overall mass transfer between the liquid and gas phase will depend as well on the porosity of the microporous membranes, the number of layers of microporous membrane fibers, or advantageously layers of membrane cloth, planarly positioned in the gas conduit transverse to the direction of gas flow. The number of layers of membrane fibers will in turn be limited by the energy loss tolerable in the gas stream flow as measured by gas stream pressure drop across the gas porous membrane barrier. The number of layers of membrane cloth may be one hundred or more, conveniently less than sixty layers, and more advantageously less than forty layers, but generally at least five layers.

A driving force in the operation of the apparatus and method of the instant invention is the flow of gas across the surface of the microporous membrane fibers. Gas phase flow within the gas conduit is achieved according to conventional methods and apparatus such as compressors, pumps and blowers. As the gas flows through an array of membrane fibers planarly arranged as cloth or tape or layers of the same interposed in the gas conduit in a generally perpendicular orientation to the direction of flow of gas, a mechanical pressure differential develops across the membrane mass transfer apparatus. The upper limit of the pressure difference is limited by the physical strength of the microporous membrane fibers installed. The fibers may be supported in the gas conduit by wire screen or other mechanical support means in order to operate the apparatus at larger pressure differences across the membranes than would be attainable if the polymeric microporous hollow fiber membranes were unsupported. Mass transfer between gas phase and liquid phase is effective at such pressure difference across the membrane apparatus as will cause gas to flow through the porous planar array of membrane fibers intimately contacting individual microporous membrane fibers. Effectively, said pressure difference is from nearly zero to 10 meters of water, advantageously from 0.003 cm of water to 100 cm of water, more advantageously from 0.02 cm of water to 10 cm of water.

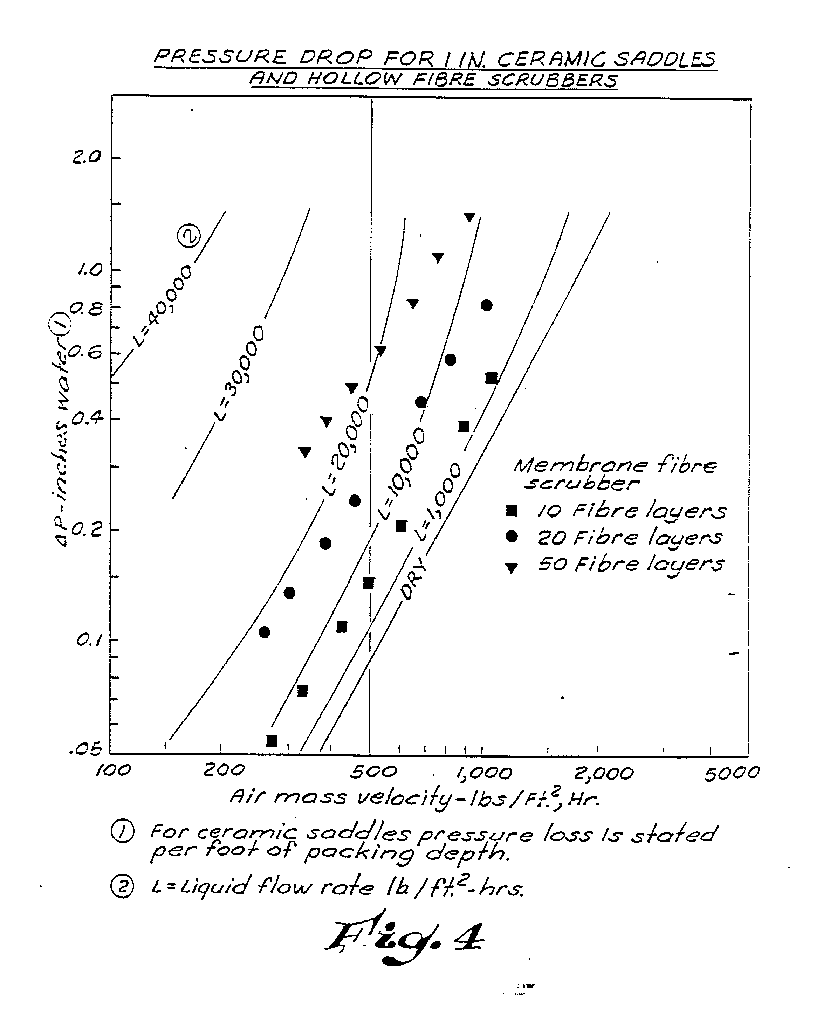

For conventional gas-liquid mass transfer operations, the gas phase pressure loss is related to the liquid flow rate. A typical graphic representation of gas phase pressure loss for ceramic tower packing material is shown in Figure 4. The solid lines plotted in Figure 4 are gas phase pressure losses for 1 in (2.54 cm) nominal size commercially available ceramic saddles. The data is adapted from the manufacturers data. The active surface area of gas-liquid mass transfer in conventional unit operations, such as in a packed tower, varies with the rate of fluid flow: the rate of gas phase mass transfer increases with increased gas phase flow rate; the liquid phase mass transfer rate increases with the liquid flow rate. McCabe and Smith, Unit Operations of Chemical Engineering, McGraw-Hill Book Co., 1967, p. 667. Examples of the dependence of the rate of mass transfer on the liquid flow rate in conventional systems can be found in Perry & Chilton, Chemical Engineers Handbook, 5th ed., McGraw-Hill Book Co., §18 Gas-Liquid Systems, 1973, particularly pages 3 through 48. The gas phase pressure loss is represented as a function of the depth of packing. The liquid flow rate is measured per unit of cross-section area of the packed tower. The gas phase flow rate is also given per unit of cross-section area of the packed tower. The measurement units for Figure 4 are

L = Liquid flow rate, lbs/ft$^2$-hr

$\Delta P$ = pressure loss across membranes, in($H_2O$)/ft of packing depth

$V_{air}$ = gas phase mass flow rate, lbs/ft$^2$-hr

In contrast to a conventional mass transfer system, for the apparatus and method of the present invention, the gas phase flow rate is independent of the liquid phase flow rate because the cross-section area of the microporous hollow membrane fibers does not measurably vary with the flow of liquid in the bore of the hollow membrane fiber. Figure 4 also graphically shows a gas phase pressure loss across a membrane apparatus of 10, 20, and 50 membrane cloth layers. The gas phase pressure loss across the membrane apparatus in the gas conduit is shown on Figure 4 to approach a linear relationship to the number of membrane cloth layers in the generally planar array of fibers.

A further mass transfer driving force is the flow rate of liquid in the bores of the microporous fibers of the planar array. If the liquid in the microporous hollow membrane fiber remains stagnant in the membrane fiber indefinitely an equilibrium concentration of the gas phase component intended to be transferred to the liquid phase will eventually result. As for conventional gas-liquid mass transfer systems, the liquid phase must be renewed at the gas-liquid interface in order to provide a driving force between the equilibrium concentration of the gas phase component and the same component in the liquid phase. The liquid flow rate for conventional gas-liquid mass transfer systems is often expressed as a ratio of the mass of liquid to the mass of gas entering the mass transfer apparatus. Effective ratios of inlet liquid mass to inlet gas mass for the apparatus of the instant invention may range from 100 kg$_{(l)}$ to 1 kg$_{(g)}$ to 10 kg$_{(g)}$ to 1 kg$_{(l)}$; more effective will be ratios of liquid to gas ranging from 60 kg$_{(l)}$ to 1 kg$_{(g)}$ to 1 kg$_{(l)}$ to 1 kg$_{(g)}$; most effective will be ratios ranging from 30 $kg_{(l)}$ to 1 $kg_{(g)}$, to 3 $kg_{(l)}$ to 1 $kg_{(g)}$.

Example 3

In each of a series of runs, the gas pressure loss is measured across the membrane of the apparatus constructed as in Example 1 using air as the gas phase. Air at various measured flow rates is passed through the gas conduit. The pressure difference on each side of the generally planar array of membrane cloth placed essentially normal to the direction of gas flow is measured. Pressure losses and air flow are tabulated in Table 1.

Table 1

| Air Flow (l/min) | Inlet Pressure (cm $H_2O$) | Pressure Loss Across Membrane (cm $H_2O$) | Lbs Air/-Hr-Ft² | Kg air/-hr-m² |
|---|---|---|---|---|
| 70 | 5.6 | 0.14 | 230 | 1100 |
| 85 | 8.4 | 0.16 | 277 | 1350 |
| 113 | 17 | 0.25 | 373 | 1830 |
| 141 | 27 | 0.35 | 471 | 2300 |
| 170 | 46 | 0.52 | 575 | 2800 |
| 226 | 70 | 0.96 | 784 | 3800 |
| 254 | 140 | 1.3 | 939 | 4600 |
| 268 | 230 | 1.7 | 1043 | 5100 |

Graphically represented in Figure 4 is the data reported in Table 1. Also graphically represented is gas phase pressure loss across the membrane layers of the apparatus prepared according to Examples 1 and 2, including gas phase pressure loss of an apparatus having 50 layers of microporous membrane fiber cloth. Figure 4 suggests that the gas side pressure loss nearly linearly relates to the number of membrane fiber layers (membrane cloth layers) positioned normal to the gas flow.

As noted above, for comparison purposes, also presented in Figure 4 is pressure loss reported for commercially available 1-in dumped ceramic rings as a function of the packing depth in feet. Examination of Figure 4 for gas phase pressure loss of the membrane apparatus and the gas phase pressure loss of conventional packed towers shows that the shape of the curve for gas phase pressure loss for the membrane system closely parallels the shape of the gas phase pressure loss of the conventional stripper system insofar as the pressure loss is related to the mass of gas flowing in the gas phase conduit per unit area without the influence of liquid flow in the packed tower, i.e., the line for dry ceramic saddles. The gas phase pressure loss of the membrane apparatus is not related, however, to the rate of liquid flow in the membrane system. In contrast, for the example of a conventional packed tower, the gas phase pressure loss-does depend on the rate of liquid flow in the packed tower. It can be seen from Figure 4 that the liquid flow impedes the gas flow.

While the gas side pressure loss of the apparatus and method of the instant invention is found to be independent of liquid phase flow rate, the mass transfer rates attainable may represent a greater advance to the art.

While the placing of microporous polymer membrane cloth as a generally planar gas-permeable or porous barrier in the gas flow conduit at a near normal orientation to the direction of the longitudinal axis of the conduit, which direction is also the direction of gas flow within the conduit, will result in a pressure loss when measured across the membrane cloth, surprisingly the inefficiencies caused by the pressure drop are more than offset by the increased mass transfer which results from the use of the hollow fiber microporous membrane apparatus and the method here described.

Mass transfer from the gas phase to the liquid phase using the apparatus of this invention in the method described can result in mass transfer rates which in a packed tower are attainable only at gas phase flow rates several orders of magnitude greater than the gas phase flow rates required by the apparatus used in the method of this invention.

Liquid flow rates are also substantially reduced by use of the apparatus and method disclosed herein. The ratio of liquid phase flow rates to gas phase flow rates for the membrane apparatus of this invention and the ratio of liquid phase flow rates to gas phase flow rates for conventional packed towers are closely parallel. But, the total mass flow of the liquid phase and gas phase necessary for the membrane apparatus to achieve mass transfer coefficients comparable to mass transfer coefficients of conventional methods are reduced by orders of magnitude from the liquid phase and gas phase flow rates of conventional packed towers.

Example 4

Comparison 1

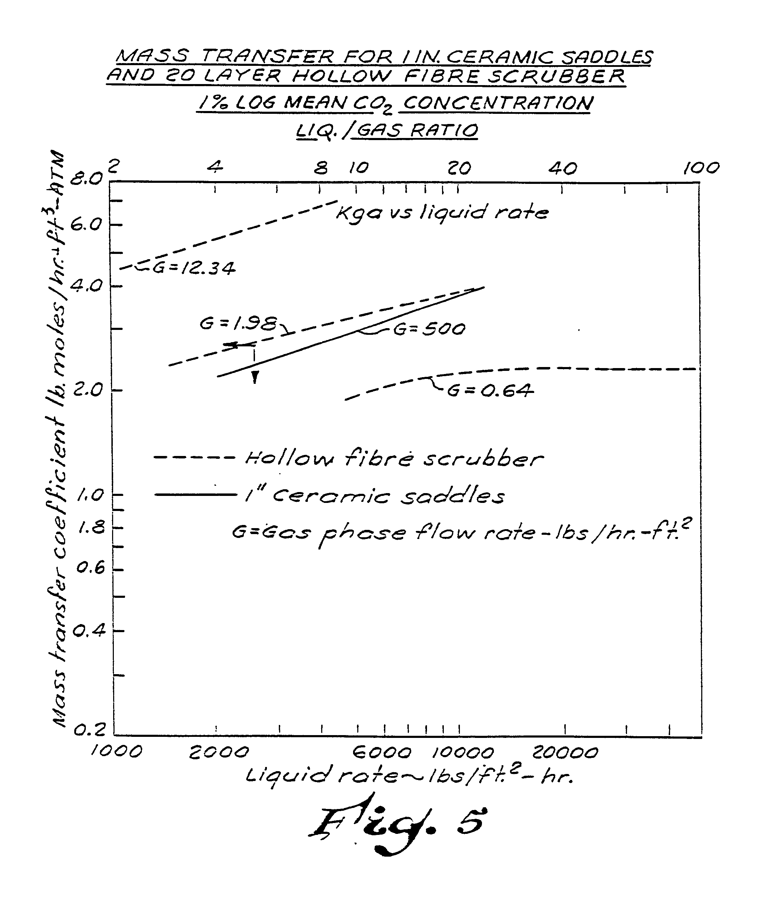

Conventional tower packing material mass transfer data is conveniently assembled from the known process for scrubbing a gas phase containing one percent by weight $CO_2$ with a solution of 1N NaOH as the scrubbing liquor. Figure 5 graphically shows for comparison purposes mass transfer coefficients for the mass transfer of $CO_2$ from air containing 1 percent $CO_2$ to aqueous 1N NaOH for a tower packed with 1 in (2.54 cm) ceramic saddles over corresponding range of liquid-to-gas ratios at a gas flow rate of 500 lb/hr-ft$^2$. The data for the packed tower absorption process is extracted from literature published by a commercial source of 1 in (2.54 cm) ceramic saddles. Where the weight ratio of liquid to gas for commercial one-inch nominal size ceramic saddles of a packed tower is 10, a mass transfer rate of 3 lb moles/hr-ft$^3$-atm (39 g moles/hr-m$^3$-atm) can be achieved at a gas flow rate of 500 lb/hr-ft$^2$ (4.9 kg/hr-m$^2$). This gas flow rate corresponds to a liquid flow rate of 5,000 lb/hr-ft$^2$ (49 kg/hr-m$^2$).

For the system of scrubbing one percent $CO_2$ in air with a solution of 1N NaOH mass transfer coefficients measured in lb moles/hr-ft$^3$-atm are determined for microporous membrane apparatus having 20 layers of membrane cloth prepared according to Example 2 over a range of liquid to gas mass ratios from 2 to 50 and at gas flow rates of 0.64 lb/hr-ft$^2$ (3.1 kg/hr-m$^2$), 1.98 lb/hr-ft$^2$ (9.7 kg/hr-m$^2$) and 12.34 lb/hr-ft$^2$ (6 kg/hr-m$^2$). The mass transfer coefficients are graphically presented on Figure 5.

The comparison data show, as noted above, that in order for the packed tower of commercial ceramic saddles to attain a mass transfer coefficient of 3 lb. moles/hr-ft$^3$-atm (49 g- molds/hr. m$^3$ atm), it is necessary for the packed tower to have a gas flow rate of 500 lb/ft$^2$-hr (2440 kg/hr-m$^2$), and a liquid flow rate of 5,000 lb/ft$^2$-hr (24400 kg/hr-m$^2$). The membrane device of Example 4 achieves a similar mass transfer coefficient with a gas flow rate of only 2 lb/ft$^2$-hr (9.8 kg/hr-m$^2$) and a liquid flow rate of aqueous 1N NaOH of only 16 lb/ft$^2$-hr (78 kg/hr-m$^2$).

It is apparent from the foregoing that conventional packed towers suffer from severe operating limitations under marginal flow conditions such as, for example, a tank vent for a volatile chemical. Under low volume operating conditions the liquid phase tends to flow out of the packing onto the walls of a packed tower, when the ratio of the tower diameter to the diameter of the packing material is less than 8:1. Even this relationship is reported to fail in small packed towers on the order of 10 cm diameter. McCabe and Smith, Unit Operations of Chemical Engineering, McGraw-Hill Book Co., 1967, p. 642-643. As a vent stack scrubber for a tank, the apparatus described herein in the form of a small economical and efficient unit can effectively reduce the levels of atmospheric emissions of an undesired gas or vapor more simply and effectively than can be done with a packed tower. The apparatus is particularly suited as a vent stack stripper for such vapors as hydrocarbon solvents, for example; but not by way of limitation, $C_1$-$C_6$ halogen substituted hydrocarbon, a $C_1$-$C_6$ monovalent or divalent oxygen substituted hydrocarbon, $C_1$-$C_8$ amine substituted hydrocarbon, volatile inorganic acids such as hydroflouric acid or hydrochloric acid, volatile organic acids such as acetic acid, and methane sulfonic acid. and water-soluble gases such as ammonia, hydrogen sulfide, sulfur dioxide, and halogen gases.

A further advantage of the apparatus and method of the instant invention, regardless of the size of the application, is the installation versatility afforded by a membrane apparatus as described herein. A packed tower must be installed in a vertical orientation in order to create the countercurrent flow between the denser liquid phase drawn downward by the force of gravity and the upward flow of the less dense gas phase. The membrane apparatus described herein achieves a gas-liquid interface independent of gravity-influenced countercurrent flow. The membrane stripper as described herein may be installed in any orientation convenient to the application.

A further advantage of the apparatus and method of the instant invention is the potential to produce liquid stream product of sufficient concentration to be useful as a result of the high mass transfer coefficient made possible with the instant invention.

The limitations inherent in conventional gas and vapor removing methods preclude their use for the numerous small volume atmospheric releases of vapor which occur daily. The approximate minimum size useful packed tower has a diameter of 10 cm or approximately 4 inches. According to the information represented on Figure 5, a mass transfer coefficient of 3 lb moles/hr-ft$^3$-atm (49 g moles/hr-m$^3$-atm) from an air stream containing 1 percent $CO_2$ scrubbed by aqueous 1N NaOH with a liquid-to-gas ratio of 10, requires a minimum gas flow of approximately 42 lb/hr (19 kg/hr) of 1 percent $CO_2$. At a liquid-to-gas ratio of 10, this corresponds to a minimum liquid flow of 420 lbs/hr (190 kg/hr) of 1N NaOH. In contrast, a membrane apparatus as disclosed herein for the same gas stream and liquid absorber can achieve the same coefficient of mass transfer starting at a gas flow rate of only 0.165 lb/hr (75 g/hr) and a liquid flow rate of 1.3 lbs/hr (590 g/hr). Hence, the membrane apparatus can also efficiently treat low volume atmospheric emission sources not possible by conventional methods.

## Claims

1. An apparatus for transferring one or more gases from a gaseous mixture or volatile components from a liquid mixture/solution into an absorbing gas or liquid, wherein said gaseous mixture or said liquid mixture/solution is flowing in a conduit (2), said apparatus, comprising:
an array (1) of closely spaced gas porous polymeric microporous hollow membrane fibers mounted inside the conduit (2) such that said flowing gaseous or liquid mixture flows through said array (1) contacting the exterior surfaces of said fibers,
each hollow membrane fiber passing through the walls of said conduit and having first and second ends connected, beyond the walls of said conduit, to an inlet manifold, (6) and an outlet manifold (9), respectively, wherein a flowing fluid introduced into said inlet manifold (6) flows through the bores of said fibers and out said outlet manifold (9).

2. The apparatus of Claim 1 wherein said microporous hollow membrane fiber array (1) is one or more layers of a woven cloth having weft and warp fibers.

3. The apparatus of Claim 2 wherein adjacent layers of cloth of microporous hollow membrane fiber are oriented with their respective weft and warp directions substantially perpendicular to the weft and warp directions of one or more adjacent cloth layers.

4. The apparatus of Claim 2 wherein adjacent layers of cloth of microporous hollow membrane fibers are oriented with their respective weft and warp orientations varied by one or more angular degrees with respect to the warp and weft directions of adjacent cloth layers.

5. The apparatus of Claim 2 wherein adjacent layers of cloth of microporous hollow membrane fiber are oriented with their respective weft and warp orientations substantially parallel to the weft and warp directions of one or more adjacent cloth layers.

6. The apparatus of Claim 2 wherein the weft dimension of the cloth of microporous hollow membrane fiber is not less than the minimum dimension of said conduit.

7. The apparatus of Claim 1 wherein the polymeric microporous hollow fiber membrane comprises a hydrophobica polymer of a polyolefin; a halogenated polyolefin, or polybutylmethacrylate.

8. The apparatus of Claim 1 wherein the polymeric microporous hollow fiber membrane comprises a hydrophilic polymer of a polysulfone, polyhydroxyethylacrylate, polyacrylamide, or polyvinylpyrrolidone.

9. A method for transferring one or more gases from a gaseous mixture or volatile components from a liquid mixture/solution into an absorbing gas or liquid wherein said gaseous mixture or said liquid mixture/solution is flowing in a conduit, said method, comprising:
contacting said flowing gas or liquid mixture with the exterior surfaces of an array of gas porous polymeric microporous hollow membrane fibers, said array mounted in and traversing said conduit, each fiber of said array passing thorugh the walls of said conduit and having first and second ends, beyond the walls of said conduit, connected to an inlet manifold and an outlet manifolds, respectively, said manifolds in communication with the bores of said fibers; and
flowing an absorbent liquid into said inlet manifold wherein said absorbent flows through the bores of the polymeric hollow microporous membrane fibers of the array and out said outlet manifold, wherein said abosrbent is an absorbent for a desired gas or volatile component of said gaseous or liquid mixture and said desired component permeates and transfers from the exterior of said hollow fiber into said bore where it is absorbed by said absorbent.

10. The method of Claim 9 wherein there is a pressure difference in the conduit across said polymeric hollow microporous membrane fiber array of up to 10 meters of water.

11. The method of Claim 9 wherein said transfer of a component occurs from a gas phase mixture to said liquid phase absorbent.

12. The method of Claim 9 wherein said transfer of a component occurs from a liquid phase mixture to a gas phase absorbent.

13. The method of Claim 9 wherein a component of the gas phase is a chlorinated solvent or an inorganic acid.

14. The method of Claim 11 wherein the ratio of the mass of inlet gas to mass of inlet liquid is between 100 kg liquid to 1 kg gas and 1 kg liquid to 10 kg gas.

Fig. 1

*Fig. 2*

*Fig. 3*

PRESSURE DROP FOR 1 IN. CERAMIC SADDLES
AND HOLLOW FIBRE SCRUBBERS

① For ceramic saddles pressure loss is stated
per foot of packing depth.

② L = Liquid flow rate lb./ft.²-hrs.

Fig. 4

MASS TRANSFER FOR 1 IN. CERAMIC SADDLES
AND 20 LAYER HOLLOW FIBRE SCRUBBER
1% LOG MEAN $CO_2$ CONCENTRATION
LIQ./GAS RATIO

Fig. 5